# EUROPEAN PATENT APPLICATION

(11) **EP 4 826 912 A1**
(43) Date of publication of application: **21.10.2026**
(21) Application number: 26171937.1
(22) Date of filing: 13.04.2026
(51) Int. Cl.: H01R 4/34, B60L 53/16, H01M 50/50, H01R 9/22, H01R 11/28, H01R 13/631

(54) **MALE BATTERY CONNECTOR WITH TOLERANCE RANGE RECOVERY SYSTEM**

(30) Priority: 14.04.2025 IT 202500008313
(71) Applicant: TE Connectivity Solutions GmbH, 8200 Schaffhausen (CH); TE Connectivity Italia Distribution S.r.l., 10093 Collegno (TO) (IT)
(72) Inventor: CEZZA, Claudia, 10093 Collegno (IT); GENTA, Alessandro, 10093 Collegno (IT); ARJMAND ABBASI, Mohammad, 64625 Bensheim (DE); ANIL KISHORE, Sunil Kumar, 8200 Schaffhausen (CH)
(74) Representative: Grünecker Patent- und Rechtsanwälte PartG mbB

(57) **Abstract**

The present invention concerns a male battery connector 100, providing positional tolerance compensation in all the three directions X Y and Z of an orthogonal Cartesian reference system. The connector can be used for connection in electrical systems (Battery, Battery control unit, Battery junction box) in Electrical vehicles. The male battery connector 100 is adapted to be mounted on a battery control unit, for example a PCB assembly, for the connection to a header of a battery pack; said male battery connector 100 comprising an insulating housing 111 that houses a screw 112, suitable to mechanically connect the male battery connector 100 to said header, and conductive elements 113 comprising a conductor braid 113a and a sleeve 113b, suitable to electrically connect the male battery connector 100 to the header 200; wherein the male battery connector 100 is such that the housing 111 comprises a vertical element 114, an horizontal element 115 and a coupling element 116, coupling the vertical element 114 with the horizontal element 115; and the coupling element 116 is movable vertically onto the vertical element 114 and the horizontal element 115 is movable onto the coupling element 116, along a first direction and a second direction perpendicular to each other, on the plane perpendicular to the vertical movement direction of the coupling element 116.

## Description

The present invention concerns male battery connectors to be used, for example, for the connection of battery packs of an electrical vehicle. More in particular, the present invention relates to male battery connectors with a tolerance range recovery system.

### State of the art

A battery pack consists of many individual battery cells which are connected in series or parallel electrical connection to create a battery module. One or more battery modules are combined to form a battery pack. Battery modules consist of headers which act as interface to connect them to other battery modules or electronic units. The Electronic unit, generally called as a battery management system or power distribution unit or battery control unit, controls the charging, discharging and protects the battery pack from short circuits, overheating. The battery control unit can include many other functions.

Battery pack is connected to an Electronic Unit, on which multiple BCON+ plugs must be assembled simultaneously into the respective battery module header to close the connection.

According to the present invention, there are 4 battery modules stacked on top of each other to form a battery pack and they consist of 8 header connectors (4 positive and 4 negative). Due to the stacking of battery modules on top of each other, there are high positional tolerances between the 8 header battery connections in the battery pack. The battery pack is a rigid element, and the tolerances are difficult to eliminate. Therefore, these positional tolerances should be compensated on the electronic unit, which is to be mounted on the 8 header battery connectors of the battery pack.

This is achieved by the male battery connector according to the present invention, which provides the positional tolerance compensation in all the 3 directions X Y and Z of an orthogonal Cartesian reference system. The 8 male battery connectors are mounted on the electronic unit to form an assembly. This assembly is then mounted on the battery pack. The tolerance compensation of the 8 male battery connectors enables the mounting of multiple connectors to the battery pack simultaneously, in a single step.

It is, therefore, scope of the present invention to provide a male battery connector and female header, the male battery connector comprising a housing with different components, so that the male battery connector can recover tolerance in any direction.

### Summary

The present invention concerns a male battery connector, adapted to be mounted on a battery control unit, for example on a PCB assembly, for the connection to a header of a battery pack; the male battery connector comprising an insulating housing that houses a screw, suitable to mechanically connect the male battery connector to the header, and conductive elements comprising a conductor braid and a sleeve, suitable to electrically connect the male battery connector to the header; wherein the housing comprises a vertical element, an horizontal element and a coupling element, coupling the vertical element with the horizontal element; and wherein the coupling element is movable vertically onto the vertical element and the horizontal element is movable onto the coupling element, along a first direction and a second direction perpendicular to each other, on the plane perpendicular to the vertical movement direction of the coupling element.

The male battery connector according to the present invention can be a battery connector, for example to be used in an electric vehicle The male battery connector according to the present invention has the peculiarity to comprise a housing comprising three different parts moveable one with respect to the other. In this way, when the male battery connector is fixed to a battery control unit, for example a printed circuit board assembly (PCBA), its housing can be moved along all the three directions of an orthogonal Cartesian reference system XYZ. In this way, the male connector is able to recover tolerance in all directions. This is particularly useful when one or more male battery connectors have to be connected to a battery pack comprising multiple headers, because it allows the blind and simultaneous connection of several male battery connectors, already mounted on the battery control unit, to the several headers of a battery pack.

According to an embodiment of the present invention, the coupling element is movable vertically onto the vertical element of a distance Lz equal to or comprised between 6 mm and 8 mm, for example 7 mm and the horizontal element is movable of a distance ±Lx and ±Ly, equal to or comprised between ±2,5 mm and ±4,5 mm, for example of ± 3, 5 mm, respectively along the first direction and the second direction on the plane perpendicular to the vertical movement direction of the coupling element.

The value of the recover tolerance of the male battery connector according to the present invention, in all the three directions of an orthogonal Cartesian reference system XYZ, is of about ±3.5 mm. This value is sufficient to assure the possibility for a blind and simultaneous connection of several male battery connectors to the several header of a battery pack.

According to a further embodiment of the present invention, the coupling element comprises an L shaped part, wherein the vertical element is coupled to one arm of the L and the horizontal element is coupled to the other arm of the L.

The L shape of the coupling element results particularly convenient in order to allow the mobility of the male battery connector in all the three directions of an orthogonal Cartesian reference system XYZ. In this way, the vertical element of the male battery connector can be mounted on one arm of the L shaped coupling element and the horizontal element can be mounted on the other arm of the L shaped coupling element.

According to a further embodiment of the present invention, the vertical element and the coupling element comprise respectively a first and a second rail; wherein the rails are realized so to allow the sliding, along the vertical direction, of the coupling element onto the vertical element.

Rails having matching profiles allow the sliding of the coupling element onto the vertical element. In this way, the mobility of the male battery connector on one direction, therefore, recover tolerance in the same direction, is assured.

According to a further embodiment of the present invention, the vertical element comprises a cavity and the coupling element comprises a first stopper pin; wherein the first stopper pin is suitable to be inserted inside the cavity, so as to lock in a releasable manner the sliding of the coupling element onto the vertical element.

When the stopper pin of the coupling element is inserted inside the cavity of the vertical element, it is necessary to apply a force in the vertical direction to the coupling element in order to release the lock, so that the coupling element can slide onto the vertical element. The male battery connector is in a releasable lock configuration, when provided by the manufacturer. The force necessary to connect the male battery connector to the header of a battery pack is sufficient to release the lock.

According to a further embodiment of the present invention, the coupling element comprises two slots and the horizontal element comprises two pegs suited to be inserted, respectively, inside the slots wherein the slots and the pegs are configured to allow the movement of the horizontal element onto the coupling element on the plane perpendicular to the vertical movement direction.

When the housing of the male battery connector is mounted, the pegs of the horizontal element fit inside the slots of the coupling element. The profile of the slot and the form of the pegs match so that when the pegs move inside the slots, the horizontal element can properly move on the plane perpendicular to the vertical movement direction of the coupling element.

According to a further embodiment of the present invention, the slots comprise a profile suitable to limit and/or releasable lock the movement of the horizontal element onto the coupling element along the first direction onto the plane perpendicular to the vertical movement direction of the coupling element.

More in particular, the slot comprises two rectangular shaped parts comprising between them a round shaped part. The two rectangular shaped parts and the central round shaped part are linked by a concave-toward-the-slot shaped part. When the pegs are inside the round shaped part of the slot, this is the case in the initial position, i.e. in the position in which they are when provided by the manufacturer, it is necessary to apply a force in the first direction to the horizontal element in order for the pegs to be able to overcome the concave-toward-the-slot shaped part of the slots, so as to allow the movement of the horizontal element along the first direction.

According to a further embodiment of the present invention, the pegs each comprise first stoppers and second stoppers, wherein the first stoppers comprise a semi-circular shaped part and the second stoppers comprise an isosceles-triangle shaped part; wherein the first stoppers are suitable to limit the movement of the horizontal element onto the coupling element and the second stoppers are suitable to releasable lock the movement of the horizontal element onto the coupling element along the second direction onto the plane perpendicular to the vertical movement direction of the coupling element.

The second stoppers of the pegs, when the horizontal element is mounted onto the coupling element, are on the inner side of the slot wall of the slot. In this way, they releasable lock the movement of the pegs along the second direction onto the plane perpendicular to the vertical movement direction of the coupling element. It is necessary to apply a force in the second direction to the horizontal element in order for the second stoppers to be able to overcome the slot walls, so as to allow the movement of the horizontal element along the second direction. The first stoppers of the pegs limit the movement along the second direction to a distance equal to the length of the pegs themselves.

According to a further embodiment of the present invention, the horizontal element comprises a cylindrical portion suitable to house the screw and a conductive sleeve suitable to be inserted into the header of the battery pack.

The screw is suitable to assure the mechanical connection between the male battery connector and a header of the battery pack. The conductive sleeve is suitable to assure the electrical connection between a conductor braid comprised in the insulating housing and a header of the battery pack. The cylindrical portion protects the connector mechanically from external environment and provides electrical insulation.

The present invention further concerns a battery connector comprising a male battery connector according to the present invention and a header of a battery pack.

Here it is defined 'battery connector' a device obtained by connecting a male battery connector to a header. The male battery connector acts as a plug and header acts as a socket. The header comprises the means necessary to host and electrically connect the conductive elements. The header is mounted, for example, on a battery pack.

According to a further embodiment of the present invention, the header comprises female housing connector mounted on a battery.

The header for the connection of a male battery connector comprises a female housing connector, suitable to host the male battery connector, so as to allow the connection.

According to a further embodiment of the present invention, the header comprises a truncated-conical entrance profile, to guide the entrance of the male battery connector into the header of the battery pack.

A header comprising a truncated-conical entrance profile is suitable to guide the entrance of the male battery connector in it. In this way, in fact, even if the connection is performed blindly, a truncated-conical entrance profile allows a smooth entrance of the male battery connector in the header, even if the initial position of the male battery connector is not perfectly centered.

According to a further embodiment of the present invention, the male battery connector assembly comprises at least two male battery connectors according to the present invention, for example eight male battery connectors, and a battery control unit, for example a PCBA.

It is here defined as 'male battery connector assembly' a battery control unit, for example a PCBA, onto which at least two male battery connectors, for example eight, are mounted.

The present invention further concerns a battery connector assembly comprising a battery pack comprising at least two headers per module, for example eight headers and a male battery connector assembly according to the present invention, comprising male battery connectors equivalent in number to the number of the headers of the battery pack.

It is here defined as 'battery connector assembly' a male battery connector assembly connected through headers to a battery pack. For the connecting to correctly take place the number of male battery connectors of the male battery connector assembly has to be the same of the number of headers of the battery pack.

The present invention further concerns a method of assembly a battery connector assembly according to the present invention, comprising the following steps, in the order described: a) assembly of a male battery connector assembly according to the present invention, so that the male battery connector assembly comprises male battery connectors equivalent in number to the number of the headers of the battery pack; b) blind and simultaneous insertion of each of the male battery connectors into the corresponding headers of the battery pack.

Since the used male battery connectors are able to recover tolerance in any direction, the blind and simultaneous insertion of each of the male battery connectors into the corresponding headers of the battery pack is possible without risking of compromising the system or to have a bad electrical connection.

According to a further embodiment of the present invention, the truncated-conical entrance of the header guides the entrance of the male battery connector into the header of the battery pack.

The truncated-conical entrance of the headers allows the blind insertion of each of the male battery connectors, because it allows to center each male battery connector onto the corresponding header, also when the initial position of the male battery connector onto the header is not centered.

### Brief description of the figures

Fig. 1A shows a 3D view of a male battery connector according to an embodiment of the present invention.
Fig. 1B shows an exploded view of the insulating housing of the male battery connector shown in Fig. 1A.
Fig. 2 shows a side cross section of the interior of a male battery connector according to an embodiment of the present invention.
Fig. 3 shows a cross section of a side view of the male battery connector according to an embodiment of the present invention.
Figs. from 3A to 3C show an enlarged particular of Fig. 3 in different use configurations.
Fig. 4 shows a 3D view of a horizontal element of a male battery connector according to an embodiment of the present invention.
Fig. 5A shows an enlarged particular shown in Fig. 4.
Fig. 5B shows the same particular show in Fig. 5A along the YZ plane.
Fig. 6 shows a 3D view of a male battery connector according to an embodiment of the present invention.
Fig. 7A shows an enlarged particular of Fig. 6.
Fig. 7B shows a cross section along the YZ plane of the enlarged particular of Fig. 7A.
Fig. 8 shows a 3D view of a male battery connector assembly according to an embodiment of the present invention.
Fig. 9 shows a 3D view of a battery pack with 4 battery modules stacked on top of each other and eight headers.
Fig. 9A shows an enlarged particular of Fig. 9.
Figs. 10A and 10B show a battery connector according to an embodiment of the present invention, in different use configurations.

### Description of the figures

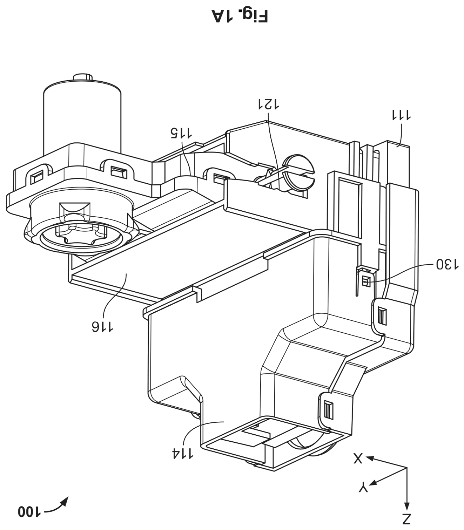

Fig. 1A shows a 3D view of a male battery connector according to an embodiment of the present invention

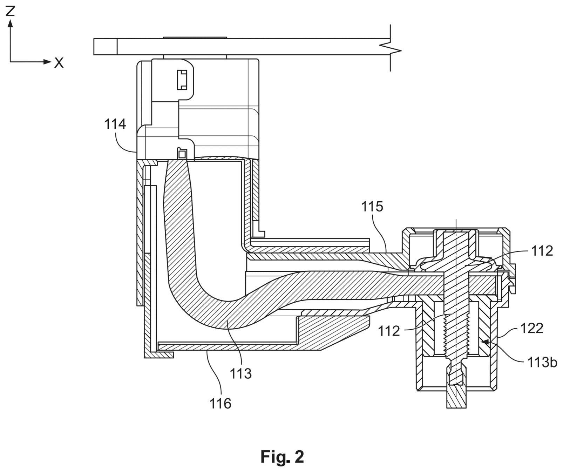

The male battery connector 100 shown in Fig. 1A is a connector suitable to electrically connect a battery pack 300 to a battery control unit, for example a PCB assembly 400, PCBA. The male battery connector 100 comprises an insulating housing 111, in which are housed a screw 112, and conductive elements comprising a conductor braid 113a and a sleeve 113b. These elements are better described with reference to Fig. 2.

To facilitate the description of the figures and their functionality we define an orthogonal Cartesian reference system XYZ, where Z is the direction parallel to the L arm of the coupling element 116 to which the vertical element 114 is coupled, X is the direction parallel to the L arm of the coupling element 116 to which the horizontal element 115 is coupled and Y is the direction parallel to both the X and Z directions.

The insulating housing 111 of the male battery connector 100 comprises a vertical element 114, a horizontal element 115 and a coupling element 116 coupling the vertical element 114 and the horizontal element 115. The coupling element 116 can comprise an L shaped part, wherein the vertical element 114 is coupled to one arm of the L, the one parallel to the Z direction and the horizontal element 115 is coupled to the other arm of the L, the one parallel to the X direction.

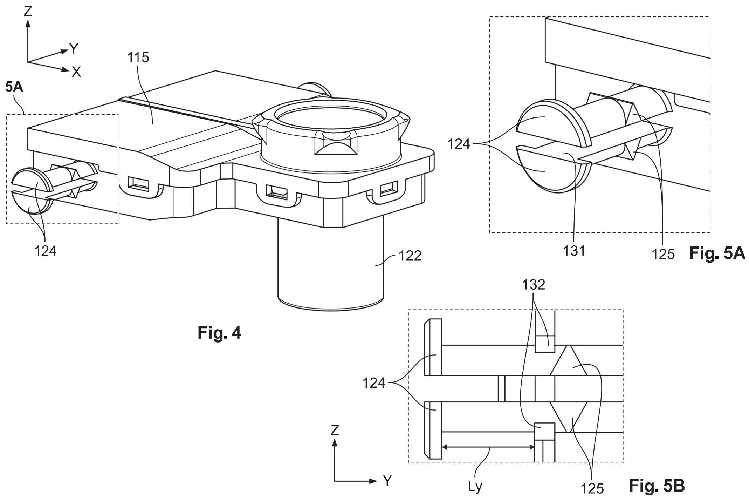

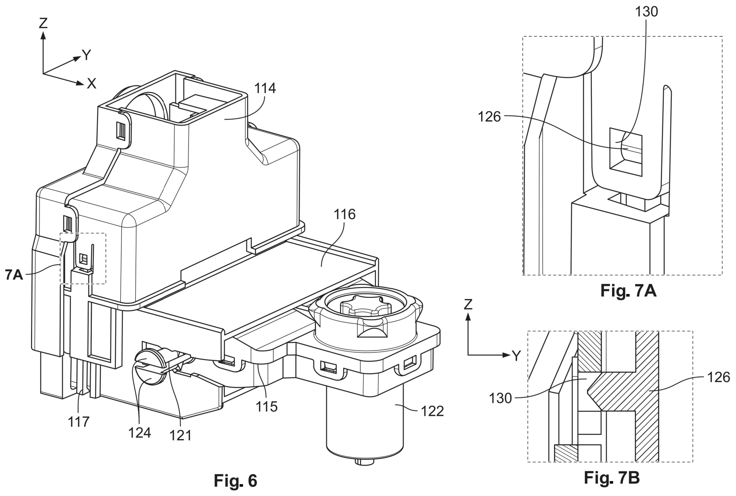

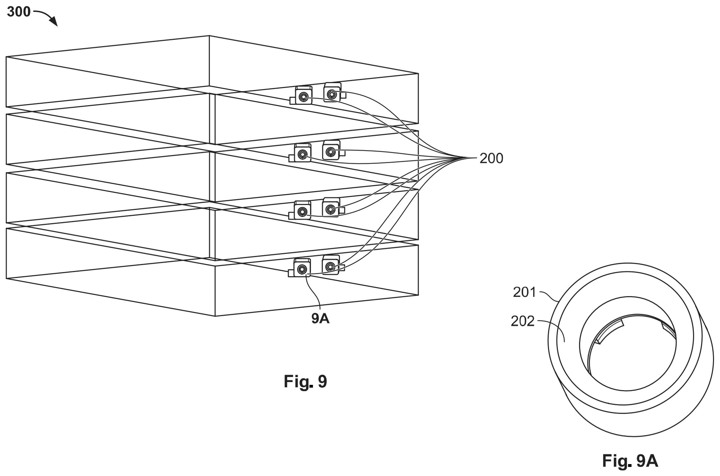

The coupling element 116, as better described with reference to Fig. 6, is suitable to move along the Z axis onto the vertical element 114. Analogously the horizontal element 115, as better described with reference to Figs. from 3A to 3C, Fig. 4, 5A and Fig 5B, is suitable to move both along the X axis and Y axis onto the coupling element 116. The flexibility of a male battery connector 100, due to the mobility of the different elements forming the housing 111, allows to blindly connect the male battery connector to a header 200 of a battery pack 300. More in particular, since a battery pack 300, better described with reference to Fig. 9, comprises at least two headers 200, for example eight, male battery connectors 100 according the present invention, in particular at least two male battery connectors 100, for example eight, can be blind and simultaneous inserted into the corresponding headers 200 of a battery pack 300. How this happens will be described in detail with reference to Figs. from 10A and 10B.

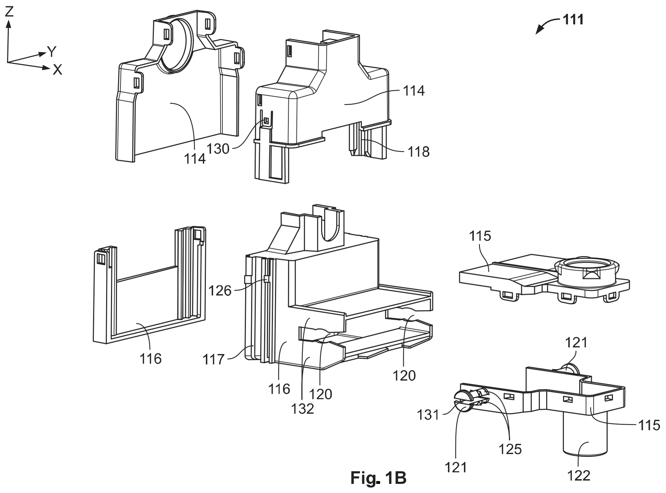

Fig. 1B shows an exploded view of the insulating housing of the male battery connector shown in Fig. 1A.

Fig. 1B shows an exploded view of the housing 111 of a male battery connector 100 according to the present invention, so that all its parts are visible. More in particular, the housing 111 comprises a vertical element 114, comprising a front and a rear piece, suitable to be mounted together. The upper part of the vertical element 114 is suitable to house part of the conductor braid 113a, as better shown in Fig. 2. On each of its sides, the vertical element 114 comprises a cavity 130, suitable to host a stopper pin 126 comprised on the coupling element 116. On each of its sides, on their inner side, the vertical element 114 further comprises a first rail 118 suitable to be coupled to a second rail of the coupling element 116, as better visible in Fig. 6, so as to allow the movement along the Z direction of the coupling element 116 onto the vertical element 114.

The housing 111 further comprises a coupling element 116 comprising a front and a rear piece, suitable to be mounted together. The coupling element 116 comprises an L shaped part, wherein the vertical element 114 is coupled to the arm of the L parallel to the Z direction that we will call, for simplicity, vertical arm in what follows. On each side of its vertical arm, the coupling element 116 comprises a stopper pin 126, better visible in Fig. 6. The stopper pin 126 is suitable to be inserted into the cavity 130 of the vertical element 114. On each side of its vertical arm, the coupling element 116 further comprises a second rail 117 realized so to allow the sliding, along the vertical direction Z, onto the vertical element 114 through the first rail 118. The stopper pin 126, when the male battery connector 100 is mounted and is in the initial position, i.e. in the position in which it is when provided by the manufacturer, is inserted into the cavity 130 of the vertical element 114 and weakly locks the sliding of the rail 117 of the coupling element 116 onto the rail 118 of the vertical element 114.

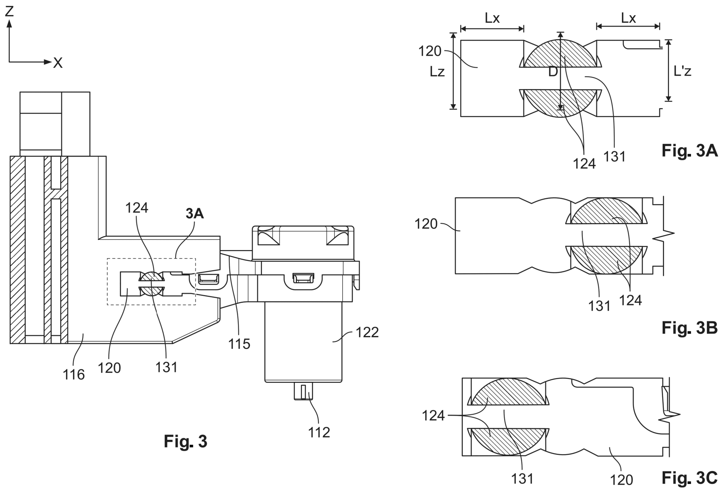

The other arm of the L of the coupling element 116, for simplicity the horizontal arm, comprises, on each of its sides, a slot 120, suitable to host each of the two pegs 121 of the horizontal element 115, when the horizontal element 115 is mounted onto the coupling element 116. The profile of the two slots 120, better visible in Figs. from 3A to 3C, comprises a specific design. More in particular, the more internal side of the slot 120 comprises a rectangular shaped part having a length Lx equal to half of the maximal possible movement of the horizontal element 115 onto the coupling element 116, along the X direction, and a width Lz, equal to the diameter d of the two semi-cylindrical parts of the pegs 121, better visible in Figs. 5A and 5B, of the horizontal element 115, that are described in detail below. Next to the rectangular shaped part, the slot 120 comprises a round shaped part. More in particular, the diameter d of the round shaped part is equal to the diameter d of the two semi-cylindrical parts of the pegs 121 of the horizontal element 115. Then, the slot 120 comprises, again, a rectangular shaped part having a length Lx equal to half of the maximal possible movement of the horizontal element 115 onto the coupling element 116, along the X direction, and a width Lz, equal to the diameter d of the two semi-cylindrical parts of the pegs 121 of the horizontal element 115. The rectangular shaped parts and the round shaped part are linked by a concave-toward-the-slot shaped part, so that in the initial position, i.e. in the position in which the male battery connector is when provided by the manufacturer, the pegs 121 are locked into the slots 120 along the X direction. Finally, the external side of the slot 120, i.e. the side facing the horizontal element 115, has a truncated-conical shaped part so as to facilitate the insertion of the pegs 121 into the slots 120 during the mounting operations. The internal side of the truncated-conical shaped part has a length L'z, along the Z direction, shorter that the diameter d of the pegs 121, as better visible in Fig. 3A.

The housing 111 further comprises a horizontal element 115 comprising an upper and a lower piece, suitable to be mounted together. The horizontal element 115 comprises a cylindrical portion 122, extending parallel to the Z direction, suitable to host a screw 112 and a conductive sleeve 113b, as better shown in Fig. 2 and a flat part, extending parallel to the XY plane and comprising two pegs 121 protruding parallel to the Y direction. The two pegs 121 comprises two semi-cylindrical parts, facing each other, extending parallel to the XY plane and divided by an empty surface 131 parallel to the XY plane. The two pegs 121 are suitable to be inserted, respectively, inside the two slots 120 of the coupling element 116. In the initial position, i.e. in the position in which the male battery connector 100 is when provided by the manufacturer, the pegs 121 are inserted and weakly locked inside the round shaped part of the slot 120. If a sufficient force is applied in the X direction to the horizontal element 115, the pegs 121, and therefore the horizontal element 115, can come over the concave-toward-the-slot shaped part of the slot 120 and move in the rectangular shaped portions along the X direction of a distance equal to ±Lx, i.e. the length of the rectangular portions of the slots 120, along the X direction. Lx can be comprised, for example, between 4.5 mm and 2.5mm. For example Lx can be 3.5 mm.

The pegs 121 further comprise first stoppers 124 and second stoppers 125. The first stoppers 124, as better shown in Fig. 5A, comprise semi-circular walls at the external end of each of the two semi-cylindrical parts of the two pegs 121. The second stoppers 125 are onto each of the two semi-cylindrical parts of the pegs 121. More in particular, the second stoppers 125 comprise prism structures with an isosceles-triangular base, parallel to the YZ plane, embedded into each of the two semi-cylindrical parts of the two pegs 121, so that the edge of the prism, corresponding to the vertexes of the isosceles-triangles bases, protrudes from each of the two semi-cylindrical parts of each peg 121. The second stoppers 125 are positioned inside the slots 120, when the horizontal element 115 is mounted onto the coupling element 116 and are suitable to weakly lock the movement of the horizontal element 115, along the Y direction, when the male battery connector 100 is in the initial position, i.e. in the position in which it is when provided by the manufacturer.

If a sufficient force along the Y direction is applied to the horizontal element, the horizontal element 115 overcomes one of the two second stoppers 125 and it will be able to move along the Y direction till the first stoppers 124 of the opposite peg 121 encounter the corresponding slot walls 132. More in particular, thanks to the first stoppers 124, the horizontal element 115 will be able to move along the Y direction, with respect to the coupling element 116, of a length Ly, well visible in Fig. 5B , equal to the distance between the first stoppers 124 and the slot 120, measured when the male battery connector is in the initial position, i.e. in the position in which it is when provided by the manufacturer. If an opposite force is applied along the Y direction to the horizontal element 115, the horizontal element 115 overcomes the other one of the two second stoppers 125 and it will be able to move along the Y axis, in the opposite direction, till the first stoppers 124 of the opposite peg 121 encounters the corresponding slot walls 132. The horizontal element 115 can, therefore, move along the Y direction of a distance equal to tLy. Ly can be comprised, for example, between 4.5 mm and 2.5mm. For example, Ly can be 3.5 mm.

The first stoppers 124 and the second stoppers 125 of the same peg 121 have, therefore a distance along the Y direction equal to Ly plus the thickness of the slot walls 132 along the Y direction.

Fig. 2 shows a side cross section of the interior of a male battery connector according to an embodiment of the present invention.

More in particular, Fig. 2 shows a cross section of the male battery connector 100 on a plane parallel to the XZ plane. In this figure, the male battery connector 100 is shown mounted.

The conductor braid 113a comprises, for example, a conductive flexible cable. In the horizontal element 115, the conductor braid 113a is connected to a conductive sleeve 113b. The conductor braid 113a and the conductive sleeve 113b form the conductive elements 113. The screw 112 and the sleeve 113b are inserted in the cylindrical portion 122 of the horizontal element 115

Fig. 3 shows a cross section of a side view of the male battery connector according to an embodiment of the present invention.

More in particular, Fig. 3 shows the housing 111 of a male battery connector 100 on a plane parallel to the XZ plane. The figure shows the horizontal element 115 mounted onto the coupling element 116. More in particular, the pegs 121 of the horizontal element 115 are inserted inside the slots 120 of the coupling element 116 and are in the initial position, as better shown with reference to Fig. 3A.

Figs. from 3A to 3C show an enlarged particular of Fig. 3 in different use configurations.

In particular, Fig. 3A shows a cross section of a lateral view of a slot 120 and a peg 121 inserted in it, for this reason, of the peg 121 are visible the two semi-cylindrical parts of the peg 121 and the empty space 131. In Fig. 3A, the peg 121 is in the initial position, i.e. it is locked inside the round shaped part of the slot 120, between the two concave-toward-the-slot shaped parts, and can be moved from this position, only if a force is applied to the system, for example to the horizontal element 115. The diameter d of the round shaped part is equal to the diameter d of the two semi-cylindrical parts of the pegs 121 of the horizontal element 115. The diameter D of the first stoppers 124 is larger than the diameter d of the round shaped part of the slot 120.

Fig. 3B shows the same particular of Fig. 3 in a different use configuration. Now, a force has been applied to the system, the two semi-cylindrical parts of the two pegs 121 have slightly come closer, temporary occupying the empty space 131 to overcome the concave-toward-the-slot shaped part of the slot 120 and the peg 121 has moved to one of the two rectangular shaped parts of the slot 120. Here the peg 121 can move, along the X direction of a distance Lx equal to the length of the rectangular shaped part of the slot 120.

Analogously, Fig. 3C shows the same particular of Fig. 3 in a different use configuration. An opposite force has been applied to the system, the two semi-cylindrical parts of the two pegs 121 have slightly come closer, temporary occupying partially the empty space 131 to overcome the concave-toward-the-slot shaped parts of the slot 120 and the peg 121 has moved to the other of the two rectangular shaped parts of the slot 120. Here the peg 121 can move, along the X direction, of a distance Lx equal to the length of the rectangular shaped part of the slot 120. Since the two rectangular shaped parts of the slot 120 have the same Lx length, we can say that the pegs 121, and therefore the horizontal element 115, can move along the X direction a distance ±Lx, where Lx can be comprised, for example, between 4.5 mm and 2.5mm. For example Lx can be 3.5 mm.

Fig. 4 shows a 3D view of a horizontal element of a male battery connector according to an embodiment of the present invention.

More in particular, the figure shows the horizontal element 115 of the male battery connector 100 separated from the rest of the male battery connector 100 and mounted, so that the first stoppers 124 and second stoppers 125 of the pegs 121 are well visible. The figure also shows in more detail, the cylindrical portion122 of the horizontal element 115 in which the screw 112 and the contact sleeves 113b are hosted.

Fig. 5A shows an enlarged particular of Fig. 4.

More in particular, Fig. 5A shows one peg 121 of the horizontal element 115. The first stoppers 124 and the second stoppers are well visible. As better visible in Fig. 5B, when the pegs 121 are in the initial position, i.e. in the position in which the male battery connector 100 is when provided by the manufacturer, the first stoppers 124 and the two semi-cylindrical parts protrudes from the coupling element 116, through the slots 120. The second stoppers 125, on the other hand, are inside the coupling element 116, on the inner side of the slots 120 and prevent the movement of the horizontal element 115 onto the coupling element 116.

Fig. 5B shows the same particular show in Fig. 5A along the YZ plane More in particular, one peg 121 of the horizontal element 115 is shown frontally, on the YZ plane, and also the slot walls 132 of the slot 120 of the coupling element 116 are shown. It is here more clearly visible that, when the pegs 121 are in the initial position, the first stoppers 124 and the two semi-cylindrical parts protrudes from the coupling element 116 through the slots 120, and the second stoppers 125 remain inside the coupling element 116, on the inner side of the slots 120 and prevent the movement of the horizontal element 115 onto the coupling element 116. In order for the horizontal element 115 to move along the Y direction, a sufficient force has applied to it, so as to allow to the second stoppers 125 to overcome the slot walls 132, as already explained with reference to Fig. 1B.

Fig. 6 shows a 3D view of a male battery connector according to an embodiment of the present invention.

More in particular, in this figure, the vertical element 114, the coupling element 116 and the horizontal element 115 are mounted together. The pegs 121 are inserted inside the slots 120, in the initial position and the stopper pin 126 of the coupling element 116 is inserted inside the cavity 130 of the vertical element 114.

Fig. 7A shows an enlarged particular of Fig. 6.

More in particular, Fig. 7A shows enlarged the cavity 130 and the stopper pin 126. When the stopper pin 126 is inserted inside the cavity 130, the male battery connector 100 is in the initial position and the coupling element 116 cannot slide onto the vertical element 114.

Fig. 7B shows a cross section along the YZ plane of the enlarged particular of Fig. 7A.

In the figure, the profile of the stopper pin 126 on the YZ plane can be properly seen. The stopper pin 126 has a pointed profile.

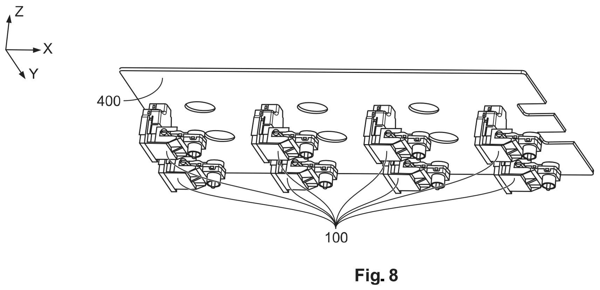

Fig. 8 shows a 3D view of a male battery connector assembly according to an embodiment of the present invention.

The male battery connector assembly 600 comprises a battery control unit, for example a PCBA 400, on which eight different male battery connectors 100 according to the present invention are mounted. Each screw 112 hosted in a horizontal element 115 of a male battery connector 100 can be connected to a header 200 of a battery pack 300, shown in Fig. 9 and 9A.

We call battery connector 500, a male battery connector 100 and the respective header 200 of a battery pack 300.

Fig. 9 shows a 3D view of a battery pack with eight headers.

The battery pack 300 shown in Fig. 9 comprises four modules 301 and each module 301 comprises two headers 200. The battery pack 300 shown can be, for example, the battery pack of an electric vehicle. Each header 200 comprises, in this case, a female housing connector 201 suitable to be connected to one of the male battery connectors 100 of the male battery connector assembly 600.

Fig. 9A shows an enlarged particular of Fig. 9.

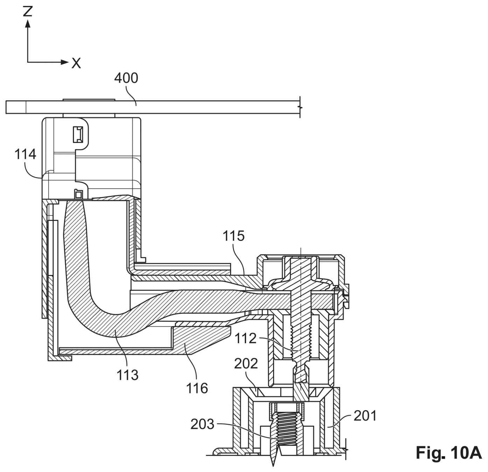

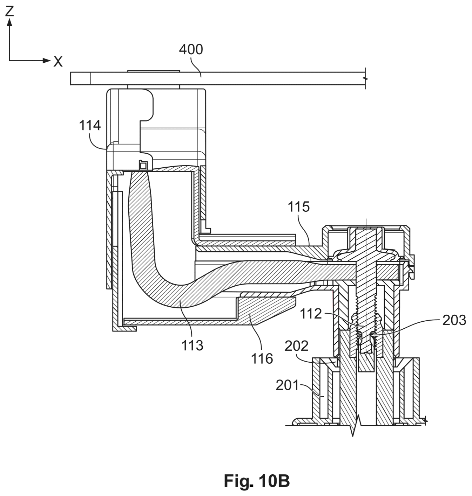

More in particular, Fig. 9A shows a 3D view of the external portion of a female battery connector 201, i.e. the portion of the female housing connector 201 protruding from the battery pack 300. The external portion of the female housing connector 201 according to the present invention comprises an insulating casing comprising a truncated-conical entrance 202. The truncated-conical entrance 202, as will be better explained with reference to Figs 10A and 10B, is realized to facilitate the entrance of the male battery connector 100 into the female housing connector 201, by taking advantage of the possibility of movement along the X, Y and Z directions that each male battery connector 100 according to the present invention has. This is due to the configuration of the insulating housing 111, as described with reference to Figs from 1 to 7B.

Figs. 10A and 10B show a battery connector according to an embodiment of the present invention, in different use configurations.

In particular, Figs. 10A and 10B show how a male battery connector 100 according to the present invention can blindly be connected to a header 200, in particular to a female housing connector 201 of a battery pack 300.

The female housing connector 201 comprises a truncated-conical entrance 202, facing the outside of the battery pack 300 and a screw counterpart 203, suitable to host the screw 112 of the male battery connector 100.

Fig. 10A shows a male battery connector 100, connected to a PCBA 400 while a blind connection with the female housing connector 201 is taking place. Since the connection is operated blindly, the cylindrical portion 122 of the horizontal element 115 of the male battery connector 100 is placed initially onto the truncated-conical entrance 202 so that it is not centered. However, the horizontal element 115 of the male battery connector 100 according to the present invention can move onto the coupling element 116 both in the X and in the Y direction and the coupling element 116 and the horizontal element 115 can move along the Z direction onto the vertical element 114, as explained with reference to Figs from 1A to 7. Therefore, once an operator applies a force onto the male battery connector assembly 600 to connect it to the battery pack 300, the truncated-conical entrance 202 of the female housing connector 201 guides the cylindrical portion 122 so as to center it and so that the screw 112 fits in the screw counterpart 203. This can contemporarily happen for all the male battery connectors 100 of the male battery connector assembly 600 and for all the corresponding-female housing connectors 201 of the battery pack 300. When all the screws 112 are inserted inside the corresponding screw counterpart 203, the operator can tighten them, assuring, in this way the electrical connection between each male battery connector 100 and the battery pack 300. It is clear that the contemporary and blind connection of a male battery connector assembly 600 to a battery pack 300 is possible only with a male battery connector 100 according to the present invention, which is moveable along the X, the Y and the Z direction.

Fig. 10B shows the male battery connector 100 centered on the female housing connector 201, ready for the operator to tighten the screw 112 into the screw counterpart 203.

We call battery connector assembly 1000, a battery pack 300 comprising at least two headers 200, for example eight headers 200 and a male battery connector assembly 600 comprising male battery connectors 100 equivalent in number to the number of the headers 200 of the battery pack 300.

The present invention further relates to a method of assembly a battery connector assembly 1000. The method comprises the following steps in the order described:
a. assembly of a male battery connector assembly 600, so that the male battery connector assembly 600 comprises male battery connectors 100 equivalent in number to the number of the headers 200 of the battery pack 300;
b. blind and simultaneous insertion of each of the male battery connectors 100 into the corresponding headers 200 of the battery pack 300.

This last step b. of the method can further comprise:
b1. the truncated-conical entrance 202 of the header 200 guides the entrance of the male battery connector 100 into the header 200 of the battery pack 300.

Even though the present invention has been described with reference to the embodiments described above, it is clear to those skilled in the art that it is possible to make different modifications of the present invention in light of the teaching described above and in the appended claims, without departing from the scope of protection of the invention.

Finally, those aspects that are considered known by those skilled in the art have not been described in order to avoid needlessly excessively obscuring the description of the invention.

Consequently, the invention is not limited to the embodiments described above but is only limited by the scope of protection of the appended claims.

### Reference numbers

- 100: male battery connector
- 111: insulating housing
- 112: screw
- 113: conductive elements
- 113a: conductor braid
- 113b: sleeve
- 114: vertical element
- 115: horizontal element
- 116: coupling element
- 117, 118: first and second rails
- 120: slot
- 121: peg
- 122: cylindrical portion
- 124: first stoppers
- 125: second stoppers
- 126: stopper pin
- 130: cavity
- 200: header
- 201: female housing connector
- 202: truncated-conical entrance
- 203: screw counterpart
- 300: battery pack
- 400: PCBA
- 500: battery connector
- 600: male battery connector assembly
- 1000: battery connector assembly

## Claims

1. A male battery connector (100), adapted to be mounted on a battery control unit, for example on a PCB assembly (400), for the connection to a header (200) of a battery pack (300); said male battery connector (100) comprising an insulating housing (111) that houses a screw (112), suitable to mechanically connect the male battery connector (100) to said header (200), and conductive elements (113) comprising a conductor braid (113a) and a sleeve (113b), suitable to electrically connect the male battery connector (100) to said header (200); said male battery connector (100) **being characterized in that** said housing (111) comprises a vertical element (114), an horizontal element (115) and a coupling element (116), coupling the vertical element (114) with the horizontal element (115); **wherein** the coupling element (116) is movable vertically onto the vertical element (114) and the horizontal element (115) is movable onto the coupling element (116), along a first direction and a second direction perpendicular to each other, on the plane perpendicular to the vertical movement direction of the coupling element (116).

2. Male battery connector (100) according to claim 1, wherein said coupling element (116) is movable vertically onto said vertical element (114) of a distance Lz, equal to or comprised between 6 mm and 8 mm, for example of 7 mm and/or said horizontal element (115) is movable of a distance ±Lx and ±Ly, equal to or comprised between ±2,5 mm and ±4,5 mm, for example of ± 3,5 mm, respectively along said first direction and/or said second direction on said plane perpendicular to said vertical movement direction of said vertical element (114).

3. Male battery connector (100) according to any of the previous claims, wherein said coupling element (116) comprises an L-shaped part, wherein said vertical element (114) is coupled to one arm of the L and said horizontal element (115) is coupled to the other arm of the L.

4. Male battery connector (100) according to any of the previous claims, wherein said vertical element (114) and said coupling element (116) comprise respectively a first and a second rail (117, 118); wherein said rails (117, 118) are realized so to allow the sliding, along the vertical direction, of the coupling element (116) onto the vertical element (114)

5. Male battery connector (100) according to any of the previous claims, wherein said vertical element (114) comprises a cavity (130) and said coupling element (116) comprises a first stopper pin (126); wherein said first stopper pin (126) is suitable to be inserted inside said cavity (130), so as to lock in a releasable manner said sliding of said vertical element (114) onto said coupling element (116).

6. Male battery connector (100) according to any of the previous claims, wherein said coupling element (116) comprises two slots (120) and said horizontal element (115) comprises two pegs (121) suited to be inserted, respectively, inside said slots (120) wherein said slots (120) and said pegs (121) are configured to allow the movement of said horizontal element (115) onto said coupling element (116) on said plane perpendicular to said vertical movement direction of said vertical element (114).

7. Male battery connector (100) according to claim 6, wherein said slots (120) comprise a profile suitable to limit and/or releasable lock the movement of said horizontal element (115) onto said coupling element (116), along said first direction onto said plane perpendicular to the vertical movement direction of the coupling element (114).

8. Male battery connector (100) according to claim 6 or 7, wherein each of said pegs (121) comprise first stoppers (124) and second stoppers (125), wherein said first stoppers (124) comprise a semi-circular shaped part and said second stoppers (125) comprise an isosceles-triangle shaped part; wherein said first stoppers (124) are suitable to limit the movement of said horizontal element (115) onto said coupling element (116) and said second stoppers (125) are suitable to releasable lock the movement of said horizontal element (115) onto said coupling element (116) along said second direction onto said plane perpendicular to the vertical movement direction of the coupling element (114).

9. Male battery connector (100) according to any of the previous claims, wherein said horizontal element (115) comprises a cylindrical portion (122) suitable to house said screw (112) and said conductive sleeve 113b, suitable to be mounted into said header (200) of said battery pack (300).

10. Battery connector (500) comprising a male battery connector (100) according to any of claims 1 to 9 and a header (200) of a battery pack (300).

11. Battery connector (500) according to claim 10, wherein said header (200) comprises a female housing connector (201) mounted on said battery pack (300).

12. Battery connector (500) according to any of claims 10 or 11, wherein said header (200) comprises a truncated-conical entrance profile (202), to guide the entrance of said male battery connector (100) into said header (200) of said battery pack (300).

13. Male battery connector assembly (600) comprising at least two male battery connectors (100) according to any of claims from 1 to 9, for example eight male battery connectors (100), and a battery control unit, for example a PCB assembly (400).

14. Battery connector assembly (1000) comprising a battery pack (300) comprising at least two headers (200), for example eight headers (200), and a male battery connector assembly (600) according to claims 13, comprising male battery connectors (100) equivalent in number to the number of said headers (200) of said battery pack (300).

15. Method of assembling a battery connector assembly (1000) according to claim 14, comprising the following steps, in the order described:
a. assembly of a male battery connector assembly (600) according to claim 13, so that said male battery connector assembly (600) comprises male battery connectors (100) equivalent in number to the number of the headers (200) of said battery pack (300);
b. blind and simultaneous insertion of each of said male battery connectors (100) into the corresponding headers (200) of said battery pack (300).

16. Method according to claim 15, when depending on claim 12, wherein said truncated-conical entrance (202) of said header (200) guides the entrance of said male battery connector (100) into said header (200) of said battery pack (300).
